# EUROPEAN PATENT APPLICATION

(11) **EP 3 059 391 A1**
(43) Date of publication of application: **24.08.2016**
(21) Application number: 16156280.6
(22) Date of filing: 18.02.2016
(51) Int. Cl.: F01D 5/14, F01D 5/18

(54) **GAS TURBINE ENGINE TURBINE BLADE COOLING USING UPSTREAM STATOR VANE**

(30) Priority: 18.02.2015 US 201514624924
(71) Applicant: United Technologies Corporation, Farmington, CT 06032 (US)
(72) Inventor: KAUFMAN, Eleanor D., Cromwell, CT Connecticut 06416 (US); SPANGLER, Brandon W., Vernon, CT Connecticut 06066 (US)
(74) Representative: Hull, James Edward

(57) **Abstract**

A method includes cooling a second component (64) in a gas turbine engine (20). The second component (64) has a baseline temperature distribution along a span. A first component (160; 260; 360; 460; 560; 660) is upstream from the second component (64). The method includes supplementing a cooling fluid flow provided by the first component (160 ... 660) with an additional cooling flow. The baseline temperature distribution of the second component (64) is altered with the additional cooling flow to provide a decreased temperature at a location along the span relative to the baseline. The baseline temperature distribution of the second component (64) is altered.

## Description

### BACKGROUND

This disclosure relates to a gas turbine engine airfoil. More particularly, the disclosure relates to a cooling configuration used to cool a turbine blade with an upstream stator vane, for example.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

The turbine section of the engine immediately downstream from the combustor is very hot and must be cooled with a cooling fluid, typically bleed air supplied to internal cooling passages in the stator vanes and turbine blades. Conventionally, film cooling holes are provided in stator vanes and blades that are in fluid communication with the internal cooling passages to supply a cooling fluid to exterior surfaces of the blade and vane, creating a boundary layer of fluid around the exterior surfaces.

Film cooling holes are strategically placed on the vane and blade and sized in order to provide the most efficient cooling for the component on which the film cooling holes are placed. That is, film cooling holes on the vane are designed to cool the vane, and film cooling holes on the blade are designed to cool the blade. No consideration is given to the cooling effects of the film cooling holes on surrounding components.

### SUMMARY

In one exemplary embodiment, a method includes cooling a second component in a gas turbine engine. The second component has a baseline temperature distribution along a span. A first component is upstream from the second component. The method includes supplementing a cooling fluid flow provided by the first component with an additional cooling flow. The baseline temperature distribution of the second component is altered with the additional cooling flow to provide a decreased temperature at a location along the span relative to the baseline. The baseline temperature distribution of the second component is altered.

In a further embodiment of the above, the supplementing step includes converging adjacent sets of film cooling holes on the first component to provide a concentrated cooling flow upstream from the second component and radially aligned with the location.

In a further embodiment of any of the above, the film cooling holes are arranged in a radial row.

In a further embodiment of any of the above, the film cooling holes are arranged in a herringbone pattern.

In a further embodiment of any of the above, the film cooling holes are arranged on a suction side of the first component.

In a further embodiment of any of the above, the film cooling holes converge at a midspan region of the first component. The location corresponds to a midspan region of the second component.

In a further embodiment of any of the above, the film cooling holes converge at a first quarter span region of the first component. The location corresponds to a first quarter region of the second component.

In a further embodiment of any of the above, the film cooling holes converge at a last quarter span region of the first component. The location corresponds to a first quarter region of the second component.

In a further embodiment of any of the above, the supplementing step includes providing an enlarged film cooling hole adjacent to smaller film cooling holes on the first component. The enlarged film cooling holes provide a concentrated cooling flow upstream from the second component and radially aligned with the location.

In a further embodiment of any of the above, the supplementing step includes supplying a cooling fluid from at least one of an inner and outer flow path surface of the first component to provide a concentrated cooling flow upstream from the second component and radially adjacent to the location.

In another exemplary embodiment, a method of designing a turbine section of a gas turbine engine. The turbine section includes a fixed stage with a stator vane and a rotating stage with a blade. The stator vane is supported by a case structure upstream from the blade. The method includes determining a baseline temperature distribution along a span of the blade and determining a desired temperature at a location along the span that is less than the baseline. A cooling feature is provided in the fixed stage that is configured to provide a cooling fluid to the location to achieve the desired temperature.

In a further embodiment of any of the above, the cooling feature includes converging adjacent sets of film cooling holes on the stator vane to provide a concentrated cooling flow upstream from the blade and radially aligned with the location.

In a further embodiment of any of the above, the film cooling holes are arranged in a radial row.

In a further embodiment of any of the above, the film cooling holes are arranged in a herringbone pattern.

In a further embodiment of any of the above, the film cooling holes are arranged on a suction side of the stator vane.

In a further embodiment of any of the above, the film cooling holes converge at a midspan region of the stator vane, and the location corresponds to a midspan region of the blade.

In a further embodiment of any of the above, the film cooling holes converge at a first quarter span region of the stator vane. The location corresponds to a first quarter region of the blade.

In a further embodiment of any of the above, the film cooling holes converge at a last quarter span region of the stator vane. The location corresponds to a first quarter region of the blade.

In a further embodiment of any of the above, the cooling feature provides an enlarged film cooling hole adjacent to smaller film cooling holes on the stator vane. The enlarged film cooling holes are configured to provide a concentrated cooling flow upstream from the blade and radially aligned with the location.

In a further embodiment of any of the above, the cooling feature is configured to supply a cooling fluid from at least one of an inner and outer flow path surface of the stator vane to provide a concentrated cooling flow upstream from the blade and radially adjacent to the location.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 schematically illustrates a high turbine of the gas turbine engine shown in Figure 1.
Figure 3A is a perspective view of the airfoil having the disclosed cooling passage.
Figure 3B is a plan view of the airfoil illustrating directional references.
Figures 4, 4A and 4B relate to a first cooling configuration.
Figures 5, 5A and 5B relate to second cooling configuration.
Figures 6, 6A and 6B relate to a third cooling configuration.
Figures 7, 7A and 7B relate to a fourth cooling configuration.
Figures 8, 8A and 8B relate to a fifth cooling configuration.
Figures 9, 9A and 9B relate to a sixth cooling configuration.
Figures 10, 10A and 10B relate to a seventh cooling configuration.
Figures 11, 11A and 11B relate to an eighth cooling configuration.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

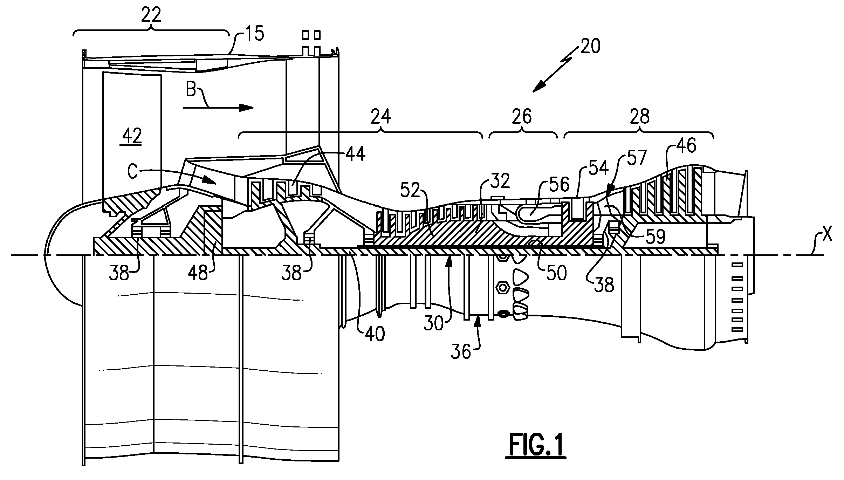

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct at least partially defined within a fan case 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

Moreover, although a commercial gas turbine engine embodiment is illustrated, it should be understood that the disclosed component cooling configuration can be used in other types of engines, such as military and/or industrial engines.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a second (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a first (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

The disclosed cooling configuration may be used in various gas turbine engine components. For exemplary purposes, a turbine blade 64 is described. It should be understood that the cooling passage may also be used in vanes, blade outer air seals, and combustor or exhaust liners, for example.

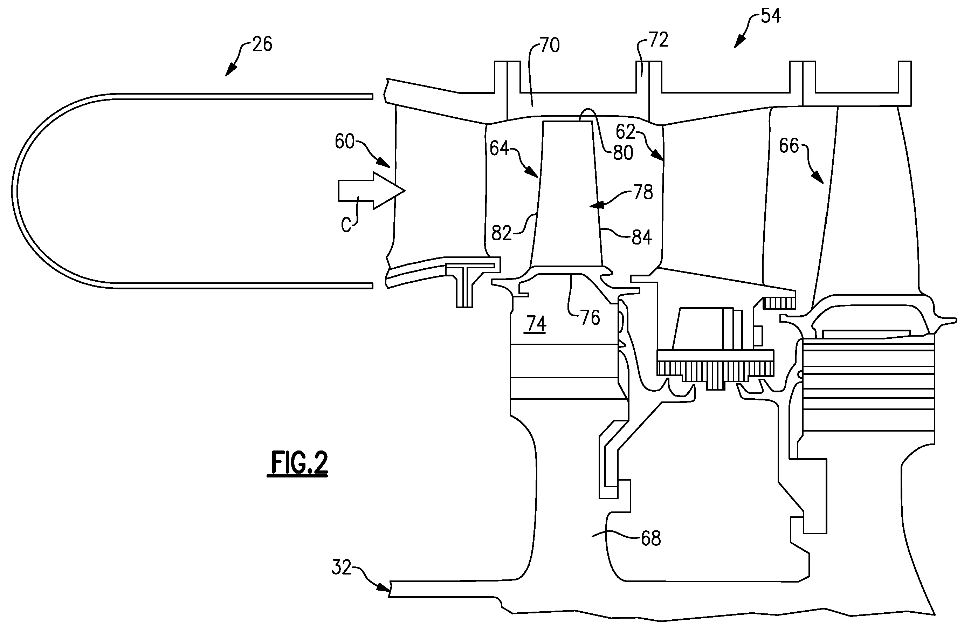

Referring to Figure 2, a cross-sectional view through a high pressure turbine section 54 is illustrated. In the example high pressure turbine section 54, first and second arrays of circumferentially spaced fixed vanes 60, 62 are axially spaced apart from one another. A first stage array of circumferentially spaced turbine blades 64, mounted to a rotor disk 68, is arranged axially between the first and second fixed vane arrays. A second stage array of circumferentially spaced turbine blades 66 is arranged aft of the second array of fixed vanes 62.

The turbine blades each include a tip 80 adjacent to a blade outer air seal 70 of a case structure 72. The first and second stage arrays of turbine vanes and first and second stage arrays of turbine blades are arranged within a core flow path C and are operatively connected to a spool 32.

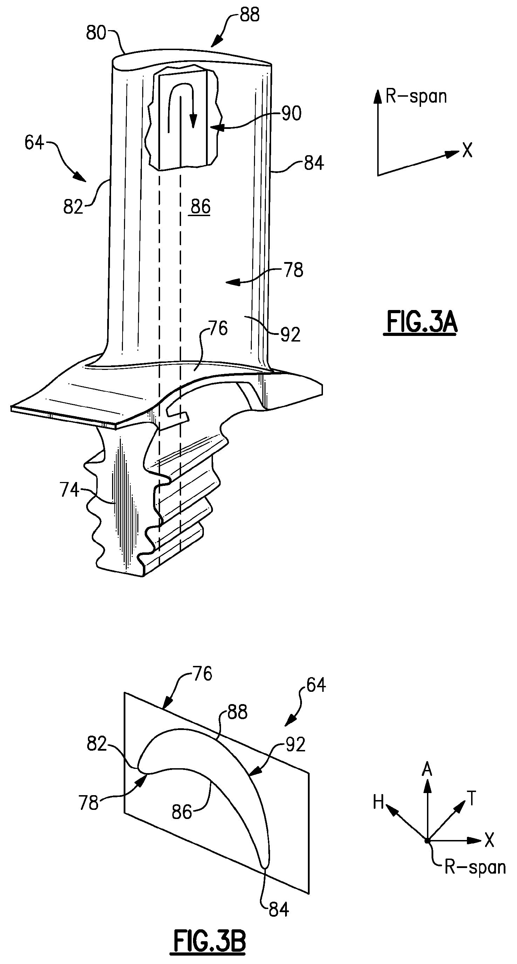

Referring to Figures 3A and 3B, a root 74 of each turbine blade 64 is mounted to the rotor disk. The turbine blade 64 includes a platform 76, which provides the inner flow path, supported by the root 74. An airfoil 78 extends in a radial direction R from the platform 76 to the tip 80. It should be understood that the turbine blades may be integrally formed with the rotor such that the roots are eliminated. In such a configuration, the platform is provided by the outer diameter of the rotor. The airfoil 78 provides leading and trailing edges 82, 84.

The airfoil 78 of Figure 3B somewhat schematically illustrates exterior airfoil surface 92 extending in a chord-wise direction H from a leading edge 82 to a trailing edge 84. The airfoil 78 is provided between pressure (typically concave) and suction (typically convex) side walls 86, 88 spaced apart in an airfoil thickness direction T, which is generally perpendicular to the chord-wise direction C, and joined at the leading and trailing edges 82, 84. Multiple turbine blades 64 are arranged circumferentially in a circumferential direction A. The airfoil 78 extends from the platform 76 in the radial direction R, or spanwise, to the tip 80.

The airfoil 78 includes a cooling passage 90 provided between the pressure and suction walls 86, 88. The cooling passage 90 may be one or more discrete passages arranged in a configuration suitable for the given application.

The above description of the blade 64 also relates to stator vane, although vanes are fixed relative to the engine static structure. The vanes may include an inner platform and/or an outer platform secured with respect to the engine static structure.

Film cooling holes are fluidly interconnected to the interior cooling passage and are provided in the exterior surface of both the vane and the blade.

According to the disclosed cooling configuration, the upstream vane is designed to cool the blade immediately downstream from the vane. In this manner, the upstream component, the vane, is used to locally reduce the gas path temperatures entering the downstream component, that is, the blade. The cooling flow in the blade can be reduced, resulting in better engine performance. The combustor may also be designed to have a flatter profile and circumferential pattern factor with reduced gas temperatures entering the first stage vane 60. This may enable reduced end wall temperatures, which mitigates blade creep and high cycle fatigue.

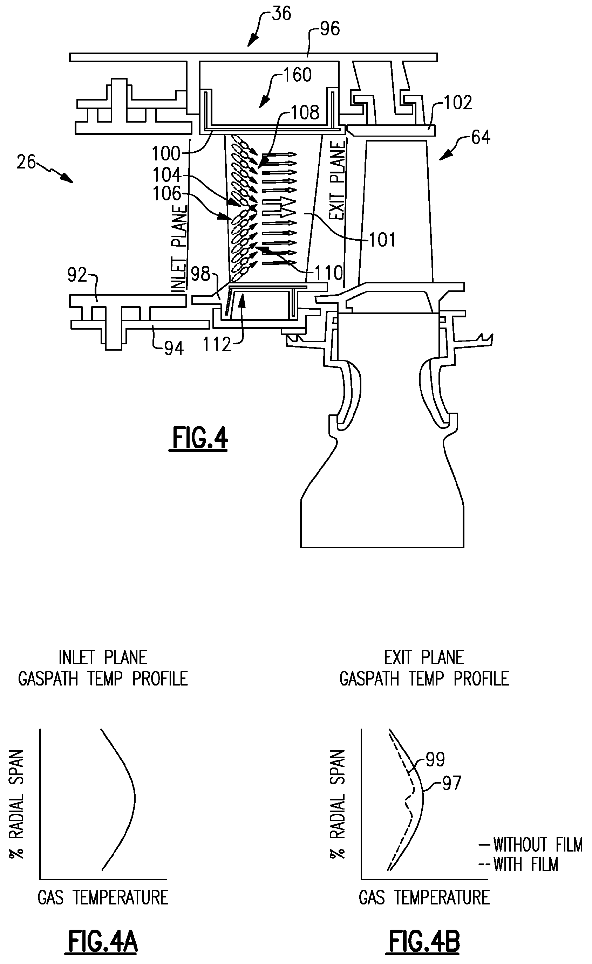

Example cooling configurations are shown in Figures 4-11. The inlet plane gas path temperature profile upstream from the vanes is illustrated in Figures 4A, 5A, 6A, 7A, 8A, 9A, 10A, 11A for the associated cooling configuration. The effects of the cooling feature associated with the stator vane (dashed line) is shown as an exit plane gas path temperature profile illustrated in Figures 4B, 5B, 6B, 7B, 8B, 9B, 10B, 11B for the associated cooling configuration. The parabolic exit plane gas path temperature profile relates to a configuration without stator vane cooling features.

Referring to Figure 4, the combustor 26 includes a combustor panel 92 and a combustor liner 94 arranged upstream from the first stage stator vane 160. The stator vane 160 and blade outer air seal 102 are supported by case structure 96 of the engine static structure 36.

The vane 160 includes inner and outer platforms 98, 100 interconnected by an airfoil 101. The airfoil 101 includes film cooling holes 106. The turbine section is designed with a baseline temperature distribution 97 along a span of the blade in mind. A desired temperature 99 is determined at a location along the span of the blade that is less than the baseline. For example, it may be desirable to reduce the temperature in a particular region of the blade. The stator vane 160 is then designed to provide a cooling feature that is configured to provide a cooling fluid and increased cooling to the location to achieve the desired temperature.

In the example shown in Figure 4, the cooling feature 104 corresponds to a configuration of film cooling holes 106. The film cooling holes 106 include first and second sets of film cooling holes 108, 110 such that the adjacent cooling holes 108, 110 are arranged to converge in a herringbone pattern. That is, the first set of film cooling holes 108 are oriented in a first direction, and the second set of cooling holes 110 are oriented in a second direction such that the first and second directions form a V shape. The first and second sets of cooling holes 108, 110 are arranged in a row 112. The cooling fluid is concentrated upstream from the blade and radially aligned with the location. The resultant reduction in temperatures at a mid-span region (25% span to 75% span) of the blade is shown, corresponding to the exit plane gas path temperature profile.

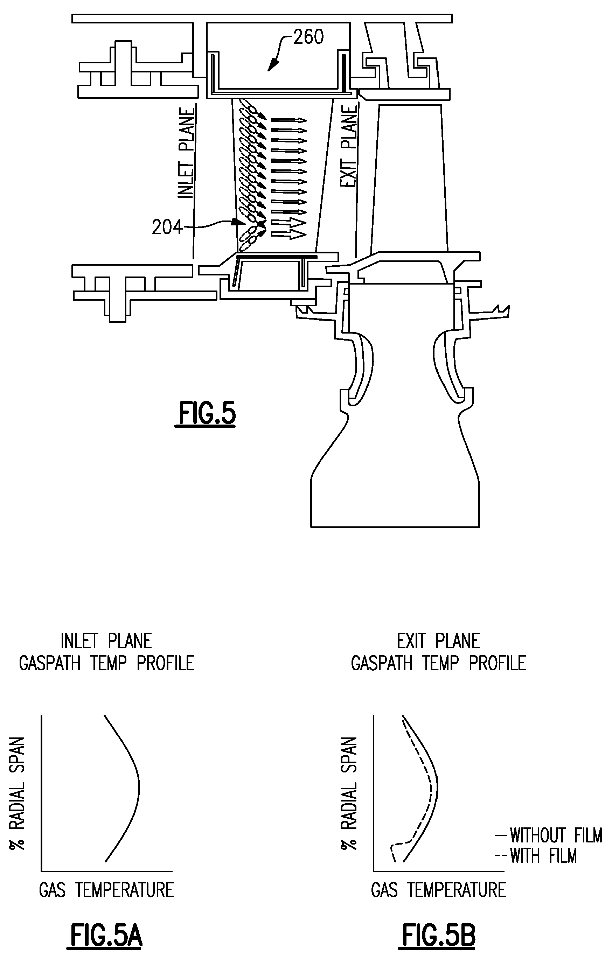

Referring to Figure 5, the cooling feature 204 is shown at a first quarter span region (0% span to 25% span) of the stator vane 260. The location on the blade corresponds to a first quarter region of the blade.

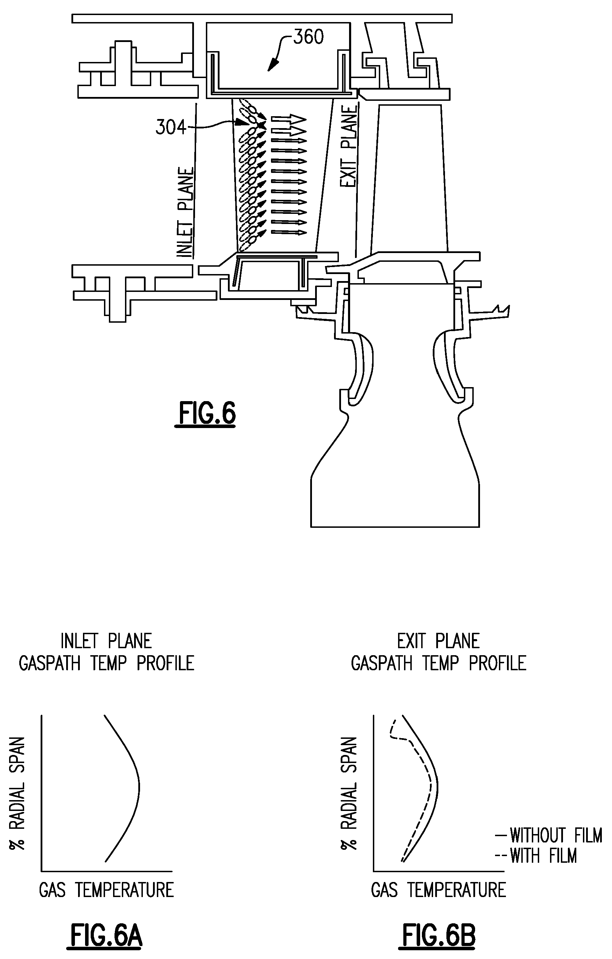

Referring to Figure 6, the cooling feature 304 is shown at a first quarter span region of the stator vane 360. The location on the blade corresponds to a first quarter span region of the blade.

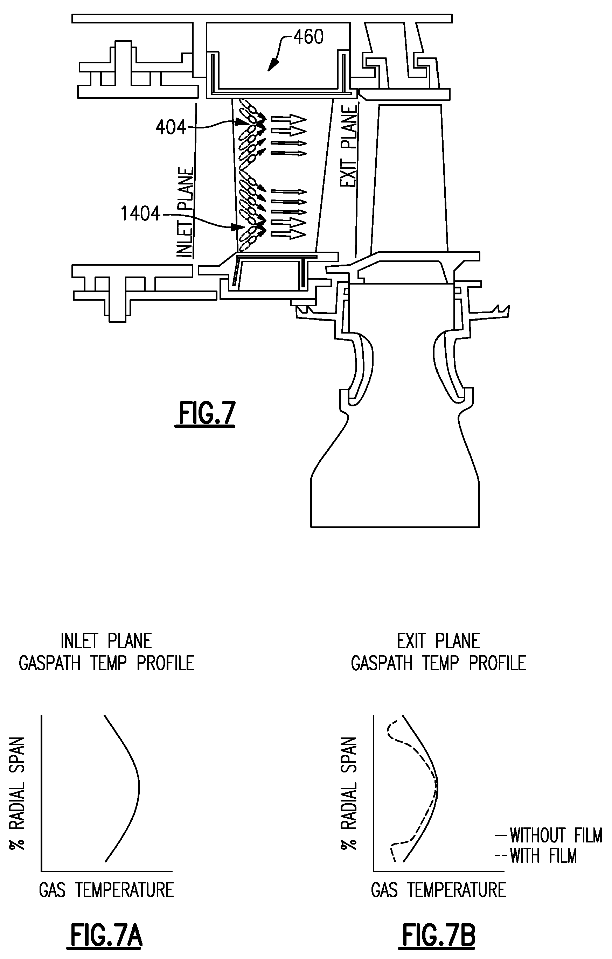

Referring to Figure 7, the vane 460 includes first and second cooling features 404, 1404 spaced apart from one another and provided at both the first and last quarter span regions(0% span to 25% span and 75% span to 100% span).

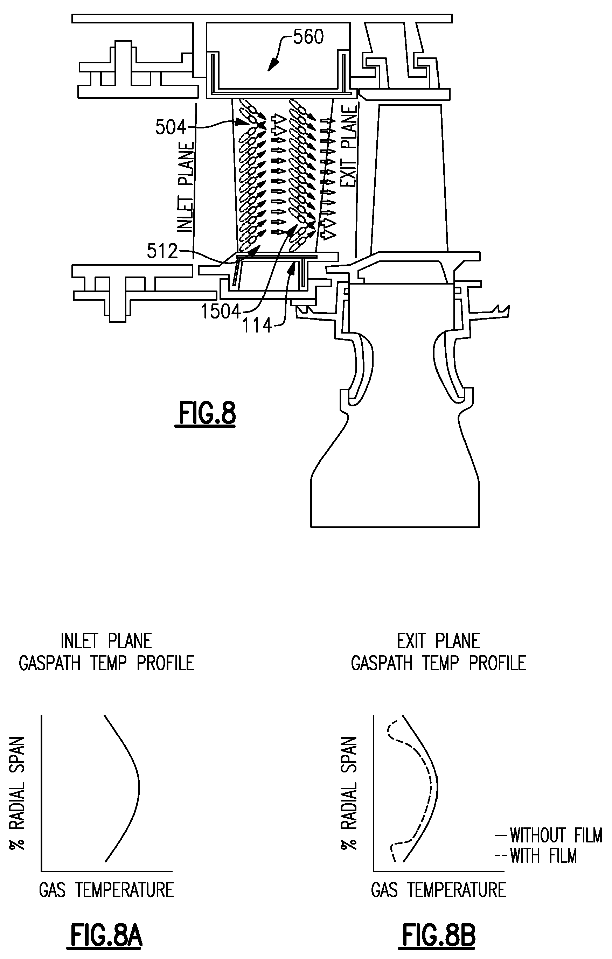

The cooling configuration shown in Figure 8 utilizes a first row of film cooling holes 512 and second row 114. The first cooling feature 504 is provided in the first row 512 and the second cooling feature 1504 is provided in the second row 114.

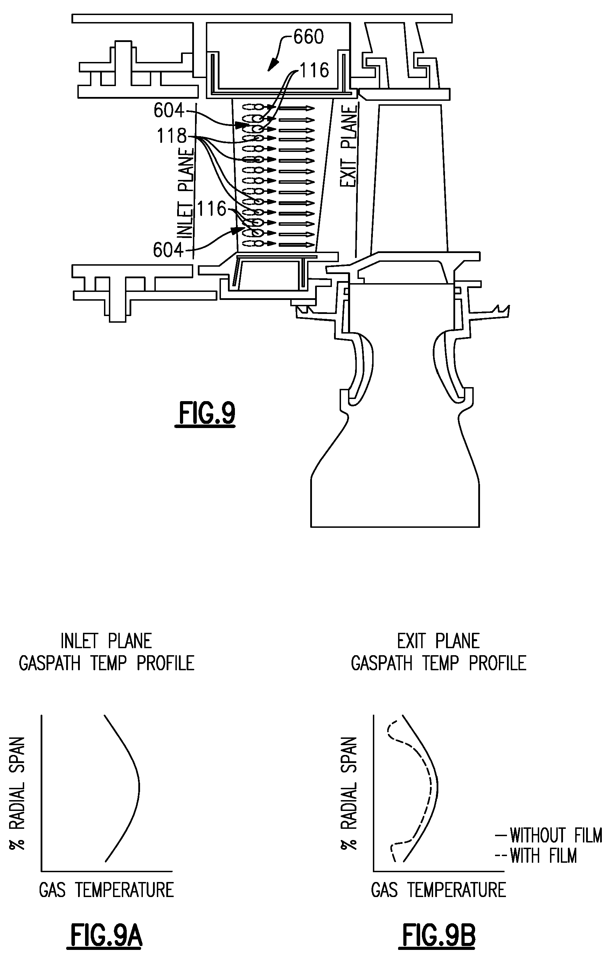

Referring to Figure 9, the stator vane 660 includes a cooling feature 604 provided by an enlarged film cooling hole 116 arranged adjacent to smaller film cooling holes 118. The enlarged film cooling holes 116 are configured to provide a concentrated cooling flow upstream from the blade and radially aligned with the location on the blade to be cooled.

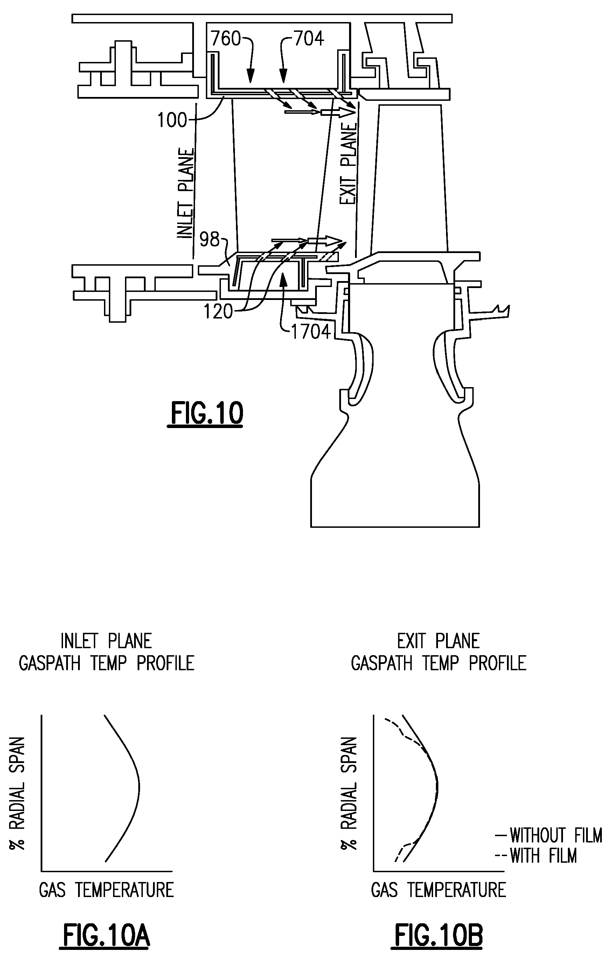

As shown in Figure 10, the stator vane 760 includes cooling features 704, 1704 respectively provided on the outer and inner platforms 100, 98. These cooling features 704, 1704 supply cooling fluid from the inner and outer flow path surfaces of the stator vane to provide the concentrated cooling flow.

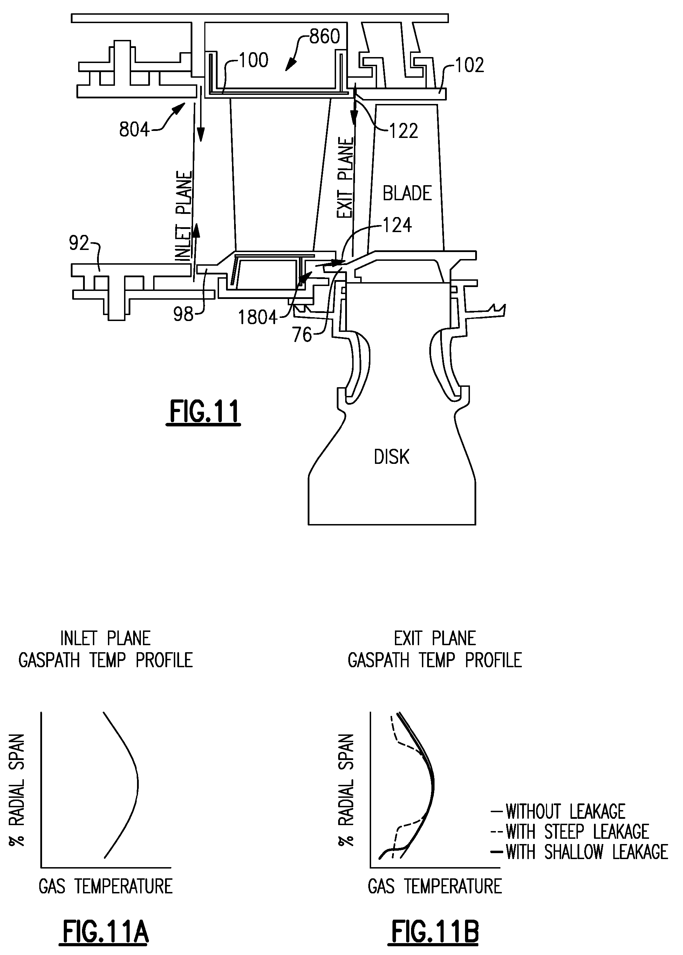

In the example shown in Figure 11, the cooling flow to the inner and outer flow paths surfaces is provided by gaps between the inner and outer platforms 98, 100 and the adjacent structure. For example, a first gap 122 is provided between the outer platform 100 and the blade outer air seal 102, and the second cooling feature 1804 is provided between the inner platform 98 and the blade platform 76. A steep leakage path oriented generally normal to the flow path surface causes the cooling fluid to penetrate more radially inward, whereas a more shallow leakage path causes the location near the end walls of the blade to be cooler as the cooling fluid does not penetrate as far.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. For example, the cooling features can be provided on a blade to cool a downstream vane. It is possible to use some of the components or features from one of the examples in combination with features or components from another one of the examples.

Although example embodiments have been disclosed, a worker of ordinary skill in this art would recognize that certain modifications would come within the scope of the claims. For that and other reasons, the following claims should be studied to determine their true scope and content.

## Claims

1. A method of cooling a second component (64) in a gas turbine engine (20), wherein the second component (64) has a baseline temperature distribution along a span, and a first component (120; 260; 360; 460; 560; 660) upstream from the second component (64), the method comprising:
supplementing a cooling fluid flow provided by the first component (160 ... 660) with an additional cooling flow; and
altering the baseline temperature distribution of the second component (64) with the additional cooling flow to provide a decreased temperature at a location along the span relative to the baseline.

2. A method of designing a turbine section (28) of a gas turbine engine (20), the turbine section (28) includes a fixed stage with a stator vane (160 ... 660) and a rotating stage with a blade (64), the stator vane (60 ... 660) is supported by a case structure (72) upstream from the blade (64), the method comprising:
determining a baseline temperature distribution along a span of the blade (64);
determining a desired temperature at a location along the span that is less than the baseline; and
providing a cooling feature (104; 204; 304; 404; 504; 604) in the fixed stage (60) that is configured to provide a cooling fluid to the location to achieve the desired temperature.

3. The method according to claim 1 or 2, wherein the supplementing step or cooling feature includes converging adjacent sets of film cooling holes (106) on the first component or stator vane (160 ... 660) to provide a concentrated cooling flow upstream from the second component or blade (64) and radially aligned with the location.

4. The method according to claim 3, wherein the film cooling holes (106) are arranged in a radial row.

5. The method according to claim 3 or 4, wherein the film cooling holes (106) are arranged in a herringbone pattern.

6. The method according to claim 3, 4 or 5, wherein the film cooling holes (106) are arranged on a suction side of the first component or stator vane (160 ... 660).

7. The method according to any of claims 3 to 6, wherein the film cooling holes (106) converge at a midspan region of the first component or stator vane (160 ... 660), and the location corresponds to a midspan region of the second component or blade (64).

8. The method according to any of claims 3 to 6, wherein the film cooling holes (106) converge at a first quarter span region of the first component or stator vane (160 ... 660), and the location corresponds to a first quarter region of the second component or blade (64).

9. The method according to any of claims 3 to 6, wherein the film cooling holes (106) converge at a last quarter span region of the first component or stator vane (160 ... 660), and the location corresponds to a first quarter region of the second component or blade (64).

10. The method according to any preceding claim, wherein the cooling feature (104 ... 604) provides an enlarged film cooling hole (116) adjacent to smaller film cooling holes (118) on the first component or stator vane (160 ... 660), and the enlarged film cooling holes (116) are configured to provide a concentrated cooling flow upstream from the second component or blade (64) and radially aligned with the location.

11. The method according to any preceding claim, wherein the cooling feature (104 ... 604) is configured to supply a cooling fluid from at least one of an inner and outer flow path surface of the first component or stator vane (160 ... 660) to provide a concentrated cooling flow upstream from the second component or blade (64) and radially adjacent to the location.
